# EUROPEAN PATENT APPLICATION

(11) **EP 2 429 191 A1**
(43) Date of publication of application: **14.03.2012**
(21) Application number: 10305969.7
(22) Date of filing: 09.09.2010
(51) Int. Cl.: H04N 7/26, H04N 7/46, H04N 7/50

(54) **Coding of depth or disparity images**

(71) Applicant: Thomson Licensing, 92130 Issy-les-Moulineaux (FR)
(72) Inventor: Kerbiriou, Paul, 35235, Thorigne Fouillard (FR); Lopez, Patrick, 35450, Livre sur Changeon (FR); Dong, Tian, Plainsboro, NJ 08536 (US); Lai, Po-Lin, Plainsboro, NJ 08536 (US)
(74) Representative: Streit, Arend

(57) **Abstract**

The invention is made in the field of depth or disparity image block encoding and decoding using at least one coding mode.

A method for encoding a block of a depth or disparity image is described wherein for each used coding mode at least two encoded blocks are determined. The at least two encoded blocks are determined by encoding the block in full resolution and in at least one downsampled resolution, wherein each encoded block comprises at least one flag indicative of the resolution and the coding mode used in encoding. Then, transmission rate cost and distortion cost are determined for each encoded block. The distortion cost is determined for a full resolution reconstruction of the respective encoded block. Finally, transmission rate/distortion ratio optimization is used for selecting one of the encoded blocks for transmission or storage.

## Description

### TECHNICAL FIELD

The invention is made in the field of depth or disparity image block encoding and decoding using at least one coding mode.

### BACKGROUND OF THE INVENTION

International Publication WO 2007/035476 describes a method for encoding a frame of visual data which comprises conditional downsampling of frames. The frames are encoded in full resolution and in downsampled resolution, both resolutions being subsequently decoded and reconstructed to full resolution. Deviation of a reconstructed characteristic is compared between the two resolutions and the resolution showing lesser deviation is selected.

Deviation of the downsampled frame can be less than the deviation of the full resolution frame because, in view of a given data rate, downsampling allows for finer quantization.

### SUMMARY OF THE INVENTION

Application of the method described above on depth or disparity images cannot provide the advantages it provides for visual images. This is because it is important that encoding of depth or disparity images maintains high accuracy in regions depicting discontinuities in depth, e.g. edges of objects in front of a background, while reconstructions of continuous regions of depth or disparity images in general do not benefit much form finer quantization used for encoding.

Thus, for depth or disparity images the reduction of information loss achieved by finer quantization in general does not outweigh the additional information loss resulting from down-sampling.

When investigating this difference between visual images and depth or disparity images in detail, the inventors recognized that additional information loss introduced by downsampling is coupled to the presence of discontinuities in depth or disparity images.

And although such discontinuities are present in almost all depth or disparity images, there are only present in a few of the blocks of which the depth or disparity image is composed. That is, the inventors recognized that conditional downsampling can be beneficial for depth or disparity images, also, if being applied at block level.

Therefore, the inventors propose the encoding method of claim 1, the decoding method of claim 2, a storage medium or device according to claim 3, an encoder according to claim 4 and a decoder according to claim 5.

The proposed method for encoding a block of a depth frame using at least one coding mode comprises determining, for each used coding mode, at least two encoded blocks by encoding the block in full resolution and in at least one downsampled resolution, wherein each encoded block comprises at least one flag indicative of the resolution and the coding mode used in encoding. Then, transmission rate cost and distortion cost are determined for each encoded block. The distortion cost is determined for a full resolution reconstruction of the respective encoded block. Finally, transmission rate/distortion ratio optimization is used for selecting one of the encoded blocks for transmission or storage. The proposed encoder comprises corresponding means.

The proposed method of decoding an encoded block of a depth or disparity image, comprises receiving data comprising an encoded block and at least one flag indicative of a resolution and a coding mode used in encoding, using the at least one flag for decoding the block, reconstructing the block, using the at least one flag for determining whether resolution is lower than a full resolution, and, if the resolution is lower than the full resolution, upsampling the reconstructed block to the full resolution. The proposed decoder comprises corresponding means.

### BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's disclosure or the invention's scope which is defined in the claims.

In the figures:
Fig. 1 depicts an exemplary prior art encoder with coding mode selection;
Fig. 2 depicts exemplary rate distortion curves on depth signals transmitted with down sampling and with full resolution; and

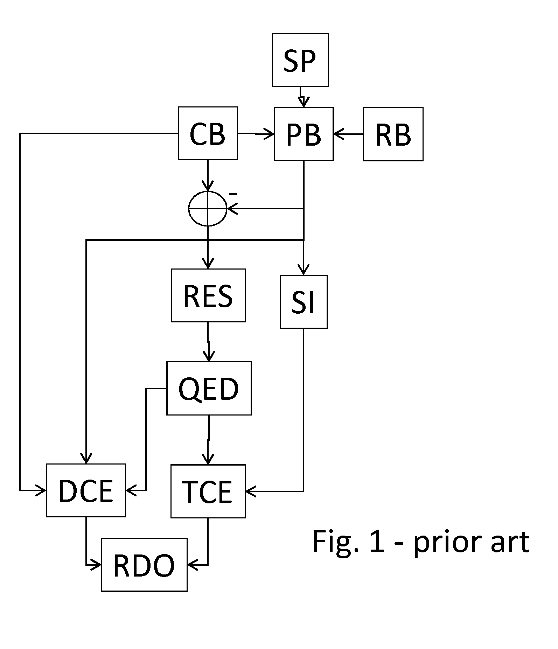

Figure 1: depicts an exemplary encoder according to the invention.

### EXEMPLARY EMBODIMENTS OF THE INVENTION

The invention may be realized on any electronic device comprising a processing device correspondingly adapted. For instance, the invention may be realized in a television, a mobile video phone, a set top box, a personal computer, a digital still camera or a digital video camera adapted for acquiring depth frames or a car multimedia system.

Prior art mode selection is exemplarily depicted in figure 1 and consists in testing costs of all possible coding modes available for block encoding. Then that coding mode is chosen which provides the lowest cost.

First, the encoder computes, for each coding mode, a prediction PB of the current block CB and a residual RES. If the coding modes involve coding modes of different prediction, the residuals can differ in different coding modes. E.g. when Inter prediction mode is used, prediction is done using a reference block RB and when Intra prediction mode is used, prediction is done using surrounding pixels SP or fixed parameters. Then, each residual is quantized, encoded according the respective coding mode and a reconstruction of the block is determined QED. The encoder computes or estimates, for each coding mode, the transmission cost TCE of the respective encoded residual RES and of side information SI. Further, the distortion cost DCE of the respective reconstructed block is determined. Rate/distortion ratio is optimized RDO and the mode presenting the optimum rate/distortion ratio is chosen.

The solution proposed by the instant invention is to choose at the encoder level and on a block basis, if it is preferable to encode/transmit the block at full resolution or to apply the downscaling method on the current block, examples of this method are downsampling methods and subsampling methods.

It has been shown that the rate/distortion ratio, in case of low bit rate and high distortion can be better if image is first downscaled, then encoded, transmitted, decoded and rebuild at the original format.

However, this is a global processing for which decision is difficult and could vary in time depending on the nature of the content (complexity).

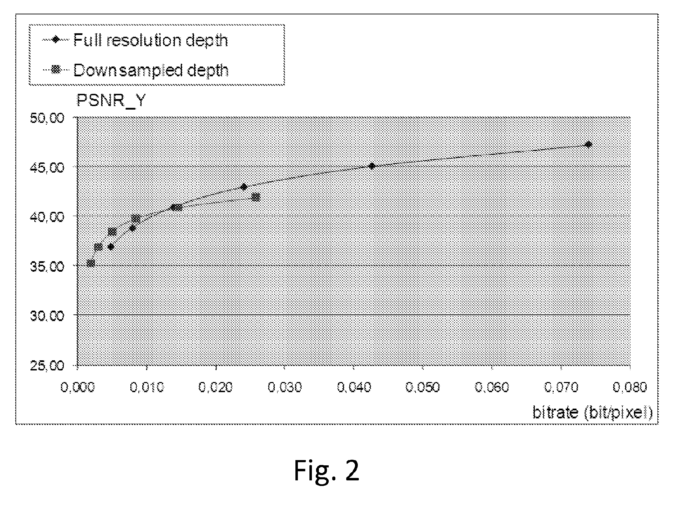

The diagram depicted in Figure 2 is an example of rate-distortion curve that can be obtained when comparing rate-distortion curve of original depth data and downscaled depth data. These curves suggest that when transmission process increases loss of information (left part of the full resolution curve), it becomes better to downscale the image even with using less quantization (so loosing less information).

In fact, computing such curve on different sequences and contents, shows that point where the curves are crossing depends on the complexity of the content. For poor content, this point can be at high bitrate meaning that the complete video could be downscaled. On the contrary for complex content the curves are crossing at low bit rate.

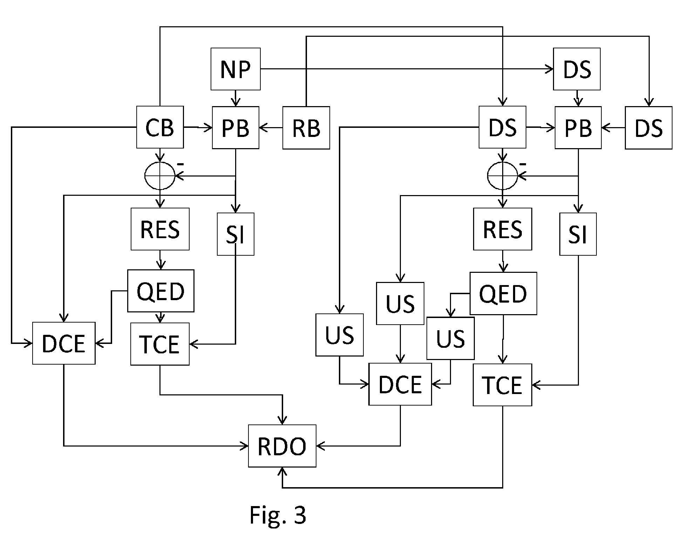

The invention adds the possibility to compute rate distortion ratio for blocks after downscaling DS as exemplarily shown in the figure 3. Indeed, modes with downscaling are in competition with those using original size.

In an embodiment the encoder firstly applies prior art mode selection for selecting a best full-resolution mode for encoding of the full resolution block.

Then, the encoder downsamples DS the block to at least one lower resolution and applies a modified mode selection for selecting at least one best lower resolution mode for encoding of the at least one lower resolution block.

In another embodiment the encoder first selects, for each used coding mode, the resolution yielding the better rate/distortion ratio. Then, the encoder determines, among the used coding modes, the one for which the selected resolution yields the overall optimal rate/distortion ratio.

If Hierarchical Motion Estimation based on the at least one lower resolution was used in prediction of the full resolution block, the at least one lower resolution block as well as motion information for prediction are already available. The motion vector of the at least one lower resolution block not necessarily coincide the motion vector of the full resolution block.

The modified mode selection differs from prior art mode selection in that distortion is calculated for an upsampled reconstruction of the at least one lower resolution block, said reconstruction being upsampled to full resolution. This is done in order to ensure comparability of rate/distortion ratio determined for the full resolution and rate/distortion ratio determined for the at least one resolution.

Finally, the encoder selects among the best full-resolution mode and the at least one best lower resolution mode the one providing the better rate/distortion ratio and the respective encoded block is transmitted or stored.

In an embodiment, the encoder computes the cost estimation for the current down-sampled block by choosing a 'prediction mode' associated with one or two displacement vector(s) if necessary. When inter mode is used, the pointed reference block is used. When Intra mode is used reference is computed with surrounding pixels or with fixed parameters.

This invention allows for conditional downscaling of image blocks, in particular depth or disparity image blocks, before transmission according to the local complexity of the content of the block.

So depending on the information complexity present in a block, the block can be downscaled or not providing a good local adaptation method. When decision is taken to choose a mode with downscaling it is ensured that the rate distortion ratio is optimized according to the decision criterion.

## Claims

1. A method for encoding a block (CB) of a depth or disparity image using at least one coding mode and comprising
- determining, for each used coding mode, at least two encoded blocks by encoding the block in full resolution and in at least one downsampled resolution, wherein each encoded block comprises at least one flag indicative of the resolution and the coding mode used in encoding,
- determining (QED, US), for each encoded block, transmission rate and distortion wherein the distortion is determined for a full resolution reconstruction of the respective encoded block, and
- using rate/distortion ratio optimization (RDO) for selecting one of the encoded blocks for transmission or storage.

2. Method of decoding an encoded block of a depth or disparity image, said method comprising
- receiving data comprising an encoded block and at least one flag indicative of a resolution and a coding mode used in encoding,
- using the at least one flag for decoding the block,
- reconstructing the block, and
- using the at least one flag for determining whether resolution is lower than a full resolution, and,
- if the resolution is lower than the full resolution, upsampling the reconstructed block to the full resolution.

3. Storage medium or device carrying an encoded depth or disparity image wherein at least one block of the depth or disparity image is encoded according to the method of claim 1.

4. Device for encoding a block of a depth or disparity image using at least one coding mode, said device comprising
- means (DS) for downsampling the block to at least one lower resolution;
- means (QED) for encoding the block in full resolution and in the at least one lower resolution, said means being adapted for including into code at least one flag indicative of the block's resolution and the encoding mode used,
- means (QED, US) for receiving the encoded blocks and for determining, for each encoded block, transmission rate and distortion wherein the distortion is determined for a full resolution reconstruction of the respective encoded block; and
- means (RDO) for receiving the determined rates and distortions and for using rate/distortion ratio optimization for selection of one of the encoded blocks.

5. Device for decoding an encoded block of a depth or disparity image, said method comprising
- means for receiving data comprising the encoded block and at least one flag indicative of the block's resolution and a coding mode used,
- means for decoding the block using the at least one flag;
- means for reconstructing the block, and
- means for using the at least one flag for determining whether resolution is lower than a full resolution, and
- means for upsampling the reconstructed block to the full resolution adapted for upsampling the reconstructed block to the full resolution if the resolution is lower than the full resolution.
